Europäisches Patentamt

European Patent Office

Office européen des brevets

(11) Veröffentlichungsnummer: **0 511 638 A1**

## (12) EUROPÄISCHE PATENTANMELDUNG

(21) Anmeldenummer: **92107254.2**

(22) Anmeldetag: **29.04.92**

(51) Int. Cl.5: **F16D 65/12**

(30) Priorität: **30.04.91 DE 4114112**

(43) Veröffentlichungstag der Anmeldung:
**04.11.92 Patentblatt 92/45**

(84) Benannte Vertragsstaaten:
**AT CH DE DK ES FR GB IT LI NL SE**

(71) Anmelder: **Bergische Stahl-Industrie**
**Papenbergerstrasse 38**
**W-5630 Remscheid(DE)**

(72) Erfinder: **Wiebelhaus, Wolfgang**
**Elsenborner Weg 3**
**W-4330 Mühlheim-Ruhr(DE)**
Erfinder: **Rocholl, Hans**
**Damaschkestrasse 17a**
**W-5630 Remscheid(DE)**

(74) Vertreter: **Jung, Hermann L., Dipl.-Chem.**
**Postfach 1728, Erlenweg 4**
**W-6380 Bad Homburg v.d.H.(DE)**

(54) **Bremsscheibe mit Nabe mit einem oder mehreren demontierbaren Bremsring bzw. -ringen.**

(57) Mit der Erfindung soll die Anzahl der einseitig oder beidseitig beaufschlagbaren Bremsringe gleicher Bauart und Bearbeitung in Abhängigkeit von der aufzunehmenden Bremsleistung einer Bremsscheibeneinheit bestimmt werden.

Fig.1

EP 0 511 638 A1

Die Erfindung betrifft eine Bremsscheibe mit Nabe mit einem oder mehreren demontierbaren Bremsringen für eine Teilbelagscheibenbremse, bei der die Bremsringe entweder ein- oder doppelseitig beaufschlagbar ausgebildet sind und die Befestigung der Bremsringe auf der Nabe in bekannter Weise erfolgt.

Bei der Entwicklung von Teilbelagscheibenbremsen stellt man zwei Entwicklungsrichtungen fest. Entweder man konstruiert für jeden Bedarfsfall die Bremsscheibe oder Scheiben neu, das heisst, man errechnet die Parameter der Bremsscheibe für jeden vorkommenden Bedarfsfall und erhält so für jedes eine neue Bremsscheibe, die sich von den davor bekannten Scheiben in wesentlichen Punkten unterscheidet. Oder man stellt eine Reihe auf, bei der die Parameter einer Bremsscheibe absatzweise verändert sind. Dies führt aber dazu, dass immer ein mehr oder minder grosser Teil der Masse einer Scheibe vergeudet wird, da man die Sprünge in den Parametern nicht zu klein machen kann und darf. In beiden Fällen ist der Aufwand beträchtlich. Einerseits ist der Konstruktionsaufwand gross, andererseits ist der nicht verwendete Überschuss so gross, dass er nicht mehr vernachlässigbar ist.

Der vorliegenden Erfindung liegt daher die Aufgabe zugrunde, die Nachteile der bekannten Konstruktionsbilder zu vermeiden und eine Möglichkeit zu schaffen, mit der die Parameter einer zu verwendenden Bremsscheibe so nah wie nur irgendmöglich den jeweiligen Anforderungen angepasst wird, ohne dass zuviel Leerlauf vorhanden ist.

Die Lösung dieser Aufgabe besteht darin, dass die Anzahl der beidseitig oder einseitig beaufschlagbaren Bremsringe gleicher Bauart und Bearbeitung in Abhängigkeit von der aufzunehmenden Bremsleistung einer Bremsscheibeneinheit bestimmt wird.

Zweckmässig ist zur Verbesserung der Wärmeableitung zwischen zwei Bremsgurten ein Ventilationseinsatz eingesetzt, vorzugsweise eingeklemmt oder Einsatz und Bremsgurt besteht aus einem Stück.

Der Vorteil der Erfindung besteht darin, dass Bremsscheiben recht eng an die Bedürfnisse und Anforderungen eines jeden Bedarfsfalls angepasst werden kann, was nicht nur zu einer erheblichen Gewichtseinsparung führt sondern auch weitaus mehr Energie einsparen hilft, ohne dass die Leistung einer Scheibenbremse herabgesetzt werden muss.

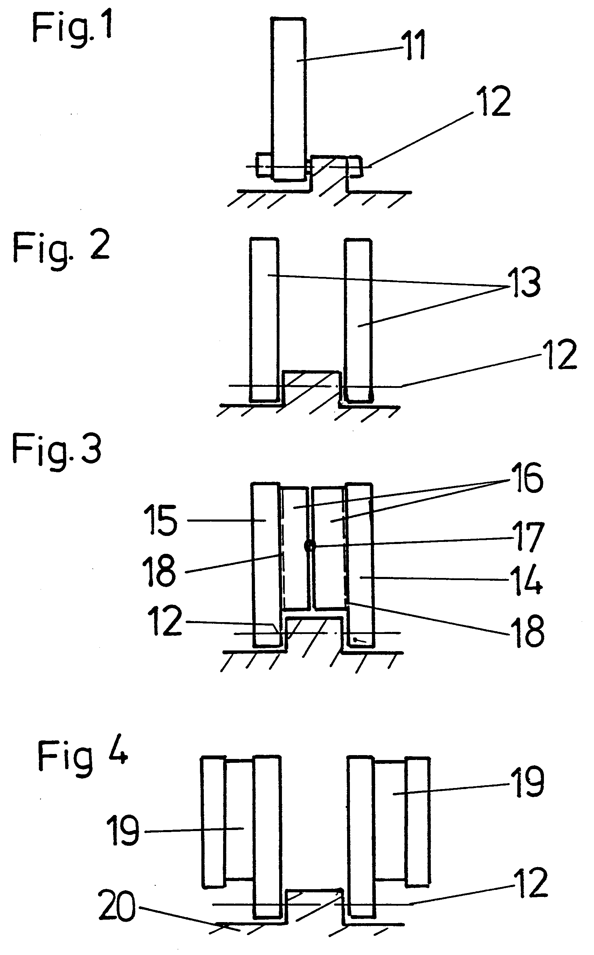

In den Figuren 1 bis 4 ist schematisch die Erfindung anhand einer Bremsscheibenreihe dargestellt.

In Figur 1 ist eine Bremsscheibe 11 in bekannter Weise an der Achswelle, zum Beispiel mit den Schrauben 12 angeschraubt. Die Bremsscheibe 11 kann einseitig oder beidseitig beaufschlagt werden.

Will man aber eine grössere Bremsleistung erreichen, so kann man nach Figur 2 zwei Bremsscheiben 13 kombinieren, die beide nur einseitig beaufschlagt werden und dann eine Bremsleistung erbringen, die eine entsprechende Leistungserhöhung bringen. Nach Figur 3 ist zwischen den beiden Bremsringen 14 und 15 ein Ventilationseinsatz 16 eingelegt, welcher zum Beispiel aus konzentrisch angeordneten Rippen besteht und der mit einem federnden Spreizglied 17 jeweils gegen die Rückseiten 18 der Bremsringe 14,15 angedrückt werden. Mit diesem Ventilationseinsatz 16 wird die Ableitung der beim Bremsen
in den Bremsringen 14 und 15 entstehenden Wäreme wesentlich verbessert.Es kann natürlich auch ein Bremsring aus zwei Bremsgurten bestehen, welche durch Rippen miteinander verbunden sind. Die Nächste Stufe stellt die Konstruktion nach Figur 4 dar, wo eine zweiseitig beaufschlagte innen belüftete Bremsscheibe 19 zweimal auf der Achswelle 2o angeordnet, zum Beispiel angeschraubt ist.

In den Figuren 1 bis 4 ist jeweils nur die Befestigung eines Bremsrings auf der Achswelle 2o mittels Schrauben dargestellt. Es ist aber ohne weiteres möglich, alle anderen bekannten Befestigungsarten von Bremsscheiben an Achswellen zu verwenden. Anstelle an der Achswelle können die Bremsscheiben nach den Figuren 1 bis 4 auch auf einer Nabe eines Schienenfahrzeugrades angeordnet sein. Zusätzlich kann zur Verbesserung der Wärmeableitung die Rückseite einer jeden Bremsscheibe noch bearbeitet sein, zum Beispiel kann die Gusshaut entfernt worden sein, was eine erhebliche Verbesserung der Wärmeableitung ergibt, oder durch Ventilationseinsätze verstärkt werden die in ihrer Ausführung den jeweiligen Einsatzfällen angepasst sind, zum Beispiel radiale oder Ausführung wie nach dem Patent DE 35 27 577.

**Patentansprüche**

1. Bremsscheibe mit Nabe mit einem oder mehreren demontierbaren Bremsringen für eine Teilbelagscheibenbremse, bei der die Bremsringe entweder ein- oder doppelseitig beaufschlagbar ausgebildet sind und die Befestigung der Bremsringe auf der Nabe in bekannter weise erfolgt, dadurch gekennzeichnet, dass die Anzahl der einseitig oder beidseitig beaufschlagbaren Bremsringe gleicher Bauart und Bearbeitung in Abhängigkeit von der aufzunehmenden Bremsleistung einer Bremsscheibeneinheit bestimmt wird.

2. Bremsscheibe nach Anspruch 1, dadurch gekennzeichnet, dass ein Bremsring mit der Nabe aus einem Stück besteht.

3. Bremsscheibe nach Anspruch 1 oder 2, dadurch gekennzeichnet, dass der Bremsring (19) aus zwei einseitig beaufschlagten Bremsgurten besteht,die durch Rippen miteinander verbunden sind.

4. Bremsscheibe nach einem der Ansprüche 1 bis 3, dadurch gekennzeichnet, dass die Nabe Teil eines Schienenfahrzeugrades ist.

5. Bremscheibe nach einem der Ansprüche 1 bis 4, dadurch gekennzeichnet, dass ein- oder beidseitig beaufschlagte Bremsringe (13) zweifach an der gleichen Nabe angeordnet sind.

6. Bremsscheibe nach einem der Ansprüche 1 bis 5, dadurch gekennzeichnet, dass zwischen zwei Bremsringen (14,15) ein Ventilationseinsatz (16) zur Verbesserung der Wärmeableitung eingesetzt, vorzugsweise eingeklemmt ist oder Einsatz und Bremsring aus einem Stück besteht.

Fig.1

11

12

Fig. 2

13

12

Fig.3

16

15

17

18

14

12

18

Fig 4

19

19

20

12

4

Europäisches
Patentamt

**EUROPÄISCHER RECHERCHENBERICHT**

Nummer der Anmeldung

| | **EINSCHLÄGIGE DOKUMENTE** | | EP 92107254.2 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
| X | DE - A - 3 432 374 (KNORR-BREMSE AG) * Kurzfassung * -- | 2,3 | F 16 D 65/12 |
| A | DE - B - 1 575 904 (GIRLING LTD.) * Fig. 2,4 * -- | 1,4 | |
| A | DE - A - 3 337 710 (KNORR-BREMSE GES. m.b.H.) * Fig. 1 * -- | 3,4 | |
| A | DE - A - 3 816 395 (BERGISCHE STAHL-INDUSTRIE) * Anspruch 1 * -- | 3 | |
| A | DE - A - 3 814 614 (KNORR-BREMSE AG) * Fig. 1 * -- | 3 | |
| D,A | DE - A - 3 527 577 (BERGISCHE STAHL-INDUSTRIE) * Gesamt * ---- | 1,3 | RECHERCHIERTE SACHGEBIETE (Int. Cl⁵) F 16 D 65/00 |

Der vorliegende Recherchenbericht wurde für alle Patentansprüche erstellt.

| Recherchenort | Abschlußdatum der Recherche | Prüfer |
|---|---|---|
| WIEN | 09-07-1992 | KAMMERER |